(19) Europäisches Patentamt

European Patent Office

Office européen des brevets

(11) **EP 0 811 774 B1**

(12) **EUROPÄISCHE PATENTSCHRIFT**

(45) Veröffentlichungstag und Bekanntmachung des Hinweises auf die Patenterteilung:
**03.05.2000   Patentblatt 2000/18**

(51) Int Cl.⁷: **F16B 13/00**

(21) Anmeldenummer: **97810066.7**

(22) Anmeldetag: **05.02.1997**

(54) **Hinterschnittanker**

Self-undercutting anchor

Cheville d'ancrage autocoupante

(84) Benannte Vertragsstaaten:
**DE FR GB**

(30) Priorität: **05.06.1996   DE 19622544**
**01.07.1996   DE 19626308**

(43) Veröffentlichungstag der Anmeldung:
**10.12.1997   Patentblatt 1997/50**

(73) Patentinhaber: **HILTI Aktiengesellschaft**
**9494 Schaan (LI)**

(72) Erfinder:
• **Beck, Hermann**
**6807 Feldkirch-Tisis (AT)**
• **Hartmann, Markus**
**6800 Feldkirch (AT)**

• **Gassner, Helmut**
**9497 Triesenberg (LI)**
• **Kossian, Susanne**
**6800 Feldkirch (AT)**
• **Kussmaul, Rainer**
**6712 Thüringen (AT)**
• **Wisser, Erich**
**6900 Bregenz (AT)**
• **Lins, Reinhard**
**9475 Sevelen (CH)**

(74) Vertreter: **Wildi, Roland et al**
**Hilti Aktiengesellschaft**
**Patentabteilung**
**9494 Schaan (LI)**

(56) Entgegenhaltungen:
**EP-A- 0 308 619          US-A- 4 702 654**

**Beschreibung**

Die Erfindung betrifft einen Hinterschnittanker gemäss dem Oberbegriff des Patentanspruchs 1.

In der Befestigungstechnik ist es vielfach erforderlich, weitgehend spreizdruckfreie Befestigungen zu erstellen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Dazu wird eine zylindrische Aufnahmebohrung in einer definierten Tiefe mit einer Hinterschneidung versehen. Das in die vorbereitete Aufnahmebohrung einsetzbare Befestigungselement umfasst eine Ankerstange mit einem angeformten Konus, die durch die axiale Durchgangsbohrung einer Hülse geführt ist. Die Hülse ist mit ausstellbaren Segmenten ausgestattet, die durch die Relativverschiebung der Hülse und der Ankerstange in die Hinterschneidung ausstellbar sind.

Zur Erstellung der Hinterschneidung ist in den meisten Fällen ein spezielles Gerät erforderlich, welches eine in der Aufnahmebohrung exzentrisch umlaufende abrasive Schneide aufweist, mit der die Hinterschneidung in die Bohrlochwandung gefräst wird. Es sind auch Hinterschnittanker bekannt, welche sich beim Setzvorgang selbsttätig eine Hinterschneidung erzeugen. Ein derartiger selbstschneidender Hinterschnittanker ist beispielsweise in der US-A-4,702,654 beschrieben und besitzt eine Hülse, die an ihrem in Setzrichtung vorderen Ende Schneidlappen aufweist, die sich von einem plastischen Gelenk in Richtung des Konus am vorderen Ende der Ankerstange erstrecken. Die Schneidlappen sind durch das Aufschieben der Hülse auf den Konus radial ausstellbar. Indem die Hülse rotiert wird, fräsen die Schneiden der gegen die Bohrlochwandung gepressten Schneidlappen die Hinterschneidung in die Bohrlochwandung. Die Hülse wird solange axial gegen den Konus gepresst und rotiert, bis die Schneidlappen vollständig ausgestellt sind und die Hinterschneidung mit der gewünschen Hinterschnittiefe erstellt ist.

Ein Nachteil bei diesen bekannten selbstschneidenden Hinterschnittankern besteht darin, dass die Schleppkurve der Schneidlappen, das ist der Kurvenverlauf, den die Aussenkontur der Axialprojektion der Schneidlappen während des Ausstellvorgangs beschreibt, nicht mit der Schnittkurve übereinstimmt, wobei die Schnittkurve durch die Axialprojektion der Hinterschneidung gegeben ist. In ihrer endgültigen Lage liegen die Aussenflächen der Schneidlappen nur an ihrem äusseren Rand an der axialen Hinterschnittfläche an. Dadurch wird die Last sehr ungleichmässig in den Untergrund eingeleitet, was bei einem sehr hohen Lastniveau zu einer Zerstörung des Untergrunds führen kann. Eine einigermassen vollflächige Anlage ist erst nach Vorspannen des Hinterschnittankers ermöglicht, bei der der Untergrund überdrückt wird und die Schneidlappen verformt werden. Dabei kann der Untergrund jedoch über Gebühr beansprucht werden, was sich nachteilig auf die erzielbaren Haltewerte auswirken kann. Die Aufnahmebohrung weist gegenüber dem Hinterschnittanker ein kleines Übermass auf, um ein ungehindertes Setzen zu ermöglichen. Die Kante im Übergangsbereich von der Wandung der zylindrischen Aufnahmebohrung zur axialen Hinterschnittfläche weist einen Abstand von der Aussenfläche der Hülse auf, der der Breite des Ringspalts zwischen der Hülse und der Wandung der Aufnahmebohrung entspricht. Bei hoher Zugbelastung des Hinterschnittankers kann diese Kante abgeschert werden. Dabei verschiebt sich der Hinterschnittanker und es ist keine sichere Befestigung mehr gewährleistet.

Aufgabe der vorliegenden Erfindung ist es daher, diesen Nachteilen der Hinterschnittanker des Stands der Technik abzuhelfen. Es soll ein selbstschneidender Hinterschnittanker geschaffen werden, bei dem die Last möglichst gleichmässig in den Untergrund eingeleitet wird. Der Hinterschnittanker soll ein hohes Lastniveau erlauben, ohne dass es zur Zerstörung des Untergrunds im Bereich der Hinterschneidung kommt. Ein Abscheren der Kante im Übergangsbereich von der Wandung der zylindrischen Aufnahmebohrung zur axialen Hinterschnittfläche soll möglichst vermieden werden. Die konstruktive Auslegung des Hinterschnittankers soll auch geringere Achs- und Randabstände ermöglichen und bei gerissenem Untergrund zu einer Verringerung der Verschiebung im sich öffnenden Riss führen.

Die Lösung dieser Aufgaben besteht in einem Hinterschnittanker, der die im Patentanspruch 1 angeführten Merkmale aufweist. Insbesondere wird durch die Erfindung ein selbstschneidender Hinterschnittanker geschaffen, der eine Ankerstange mit einem Schaft umfasst, die an ihrem in Setzrichtung vorderen Ende einen Konus aufweist, der sich zu seinem freien Ende hin erweitert. Eine längsverschiebbare Hülse ist über die Ankerstange geschoben und weist an ihrem vorderen Ende Schneidlappen auf, die durch Zwischenräume voneinander getrennt sind und sich von einem plastischen Gelenk in Richtung des Konus erstrecken. Die Schneidlappen sind durch Aufschieben der Hülse auf den Konus radial ausstellbar. Gemäss der Erfindung weisen die sich vom freien Vorderende der Schneidlappen in Richtung des plastischen Gelenks erstreckenden, schneidwirksamen Abschnitte jeweils eine vom Konus abgewandte Aussenfläche auf, die im wesentlichen als Torusfläche ausgebildet ist.

Indem die Aussenfläche der Schneidlappen über den schneidwirksamen Bereich als Torusfläche ausgebildet ist, können die Schleppkurve und die Schneidkurve der Schneidlappen weitgehend zur Übereinstimmung gebracht werden. Die Schneidlappen nehmen während des Schneidvorgangs ihre endgültige Lage in der Hinterschneidung ein, und ihre Aussenflächen liegen wegen der weitgehenden Übereinstimmung der Schleppkurve und der Schneidkurve flächig an der axialen Hinterschnittfläche an. Dadurch wird die Last sehr gleichmässig in den Untergrund eingeleitet und führt auch bei hohen Lastniveaus zu keiner Zerstörung des Untergrunds im Anlagebereich. Die gleichmässige Lasteinleitung in den Untergrund verbessert auch die erzielbaren Haltewerte des Hinterschnittankers. Durch die erfindungsgemässe geometrische Ausbildung der Schneidlappen können Hinterschneidungen erzeugt werden, deren Hinterschnittfläche auch um grössere Winkel gegenüber der Wandung der zylindrischen Aufnahmebohrung geneigt ist, als die üblicherweise erstellten 30°. Dadurch werden die bei Befestigungen mit Hinterschnittankern schon geringen zulässigen Achs- und Randabstände der Befestigungspunkte noch weiter reduziert. Die grösseren Neigungswinkel der Hinterschnittfläche verringern bei gerissenem Untergrund auch die Verschiebung des Hinterschnittankers im sich öffnenden Riss.

Eine besonders gute Übereinstimmung der Schleppkurve und der Schnittkurve und der Lasteinleitungsfläche ergibt sich, wenn die Torusfläche einen Krümmungsmittelpunkt aufweist, der durch den Schnittpunkt der Streckensymmetrale des in der Hinterschneidung befindlichen Abschnitts der Aussenfläche der Schneidlappen und der Winkelsymmetrale im Übergang vom Schaft zum Konus gegeben ist und einen Radius aufweist, der durch die Beziehung

$$R = [\, x^2 + (t/2 \sin \alpha)^2 ]^{\frac{1}{2}}$$

gegeben ist. Dabei bezeichnet R den Radius der Torusfläche, x die Länge der Streckensymmetrale vom Mittelpunkt bis zum Schnittpunkt mit der Längserstreckung des in der Hinterschneidung befindlichen Abschnitts der Aussenfläche, t die senkrecht zur Achse gemessene Hinterschnittiefe und steht α für die mittlere Neigung des in der Hinterschneidung befindlichen Abschnitts der Aussenfläche gegenüber der Achse. Der in der Hinterschneidung befindliche Abschnitt der torischen Aussenfläche der Schneidlappen stellt zugleich die Lasteinleitungsfläche dar.

Die freie Stirnfläche der Schneidlappen ist als Schneidbereich mit gehärteten Vorsprüngen, Zähnen, Schneideinsätzen oder dergleichen ausgebildet. Im Ausgangszustand ist sie im wesentlichen senkrecht zur Achse des Schaftes orientiert. Dadurch ist gewährleistet, dass die Schneiden in der Ausgangslage der Schneidlappen den Umfang der Hülse nicht überragen. Die Ausbildung der Schneiden an der Stirnfläche der Schneidlappen begünstigt die Erstellung der Schneidkurve in weitgehender Übereinstimmung mit der Schleppkurve.

Die mit der Oberfläche des Konus zusammenwirkende Rückfläche der Schneidlappen weist einen Verlauf auf, der weitgehend dem als Torusfläche ausgebildeten Abschnitt der Schneidlappen angeglichen ist, und geht in den achsparallelen Verlauf der Innenfläche der Hülse über. Der dem Verlauf der Rückfläche am nächsten kommende Krümmungskreis weist einen Mittelpunkt auf, der mit dem Krümmungsmittelpunkt der Torusfläche zusammenfällt. Durch die gewählte Geometrie der Rückfläche wird die ideale Torusschalengeometrie weitgehend angenähert, wobei der Platzbedarf der Schneidlappen minimiert ist. Die Stärke der Schneidlappen wird insbesondere über ihren schneidwirksamen Bereich weitgehend unverändert beibehalten.

Eine kostengünstig zu fertigende Annäherung der Rückfläche an die Form einer Torusfläche ergibt sich, wenn sie über ihre Längserstreckung abschnittweise angeordnete Kegel- und Zylinderflächen aufweist. Die Anordnung der Kegel- und Zylinderflächen ist dabei derart gewählt, dass die Rückseite im ausgestellten Zustand der Spreizlappen wenigstens bereichsweise in flächiger Anlage zum Konus ist. Auf diese Weise wird der Konus zur Abstützung der ausgestellten Schneidlappen eingesetzt und können die bei Belastung auf die Schneidlappen wirkenden Kräfte in den Konus eingeleitet werden.

In einer vorteilhaften Ausführungsvariante der Erfindung grenzt die torische Aussenfläche eines jeden Spreizlappens an eine Schulter, die als Zylinderfläche ausgebildet ist und sich in Richtung des Umfangs der Hülse erstreckt. Die Schulter ist über einen Verbindungsabschnitt, dessen Aussenfläche als Zylinderfläche ausgebildet ist, mit dem plastischen Gelenk verbunden. Im Ausgangszustand ist die Schulter gegenüber der Achse des Schaftes geneigt. Der Verbindungsabschnitt weist eine derartige Länge auf, dass die Schulter im ausgestellten Zustand wenigstens bereichsweise den Umfang der Hülse überragt. Durch die wenigstens bereichsweise den Umfang der Hülse überragenden Schultern erfährt der Hinterschnittanker in der Aufnahmebohrung eine Zwangszentrierung. Dadurch ist gewährleistet, dass die Hinterschneidung gleichmässig und in alle Richtungen mit der gleichen Tiefe erstellt wird. Die wenigstens bereichsweise den Umfang der Hülse überragenden Schultern überbrücken den Ringspalt zwischen der Hülse und der Wandung der Aufnahmebohrung. Indem sie in Anlage zur Wandung der Bohrung kommen, stützen sie den Untergrund insbesondere im Bereich der von Scherkräften beanspruchten umlaufenden Kante im Übergangsbereich von der Wandung zur Hinterschnittfläche.

Die Schulter und der Verbindungsabschnitt schliessen am Übergangsbereich einen rechten Winkel ein. Dadurch können die auf die Abstützschulter wirkenden Kräfte gut aufgenommen werden. In einer sehr vorteilhaften Variante der Erfindung schliest die Schulter im Ausgangszustand mit der torischen Aussenfläche derartigen Winkel ein, dass sie im ausgestellten Zustand achsparallel orientiert ist. Die Länge des Verbindungsabschnitts ist dabei derart bemessen, dass die Schulter bei ausgestellten Schneidlappen in flächige Anlage zur Wandung der Aufnahmebohrung gelangt. Diese vorteilhafte Schneidlappengeometrie begünstigt die Zentrierwirkung und die Abstützwirkung der Schneidlappen. Die Schulter liegt bei ausgestellten Schneidlappen flächig an der Wandung der Aufnahmebohrung an und stützt diese kreisringförmig ab. Der Verbindungsabschnitt ist dabei senkrecht zur Schulter und zur Achse orientiert und kann die auf die Schulter wirkenden Kräfte sehr gut aufnehmen. Zugleich stützt er den Übergang der Schneidlappen von der Hülse im plastischen Gelenk ab und wirkt einem Abscheren der Schneidlappen entgegen.

Besonders günstige Platzverhältnisse ergeben sich, wenn die Schulter im Ausgangszustand an ihrem von der Achse des Schaftes entferntesten Bereich mit der Achse einen Winkel einschliesst, der im wesentlichen dem Neigungswinkel des Konusmantels gegenüber der Achse entspricht.

Im folgenden wird die Erfindung anhand eines Ausführungsbeispiels und unter Bezugnahme auf die Figuren näher erläutert. Es zeigen in schematischer Darstellung:

Fig. 1     ein Ausführungsbeispiel eines erfindungsgemässen Hinterschnittankers im teilweisen Axialschnitt;

Fig. 2     einen Axialschnitt des erfindungswesentlichen Abschnittes des Hinterschnittankers im Ausgangszustand;

Fig. 3     einen Axialschnitt des Ausführungsbeispiels aus Fig. 1 mit ausgestellten Schneidlappen;

Fig. 4     ein Diagramm des Vorschubwegs der Schneidlappen eines Hinterschnittankers des Stands der Technik; und

Fig. 5     ein Diagramm des Vorschubwegs der Schneidlappen des erfindungsgemässen Hinterschnittankers nach Fig. 1.

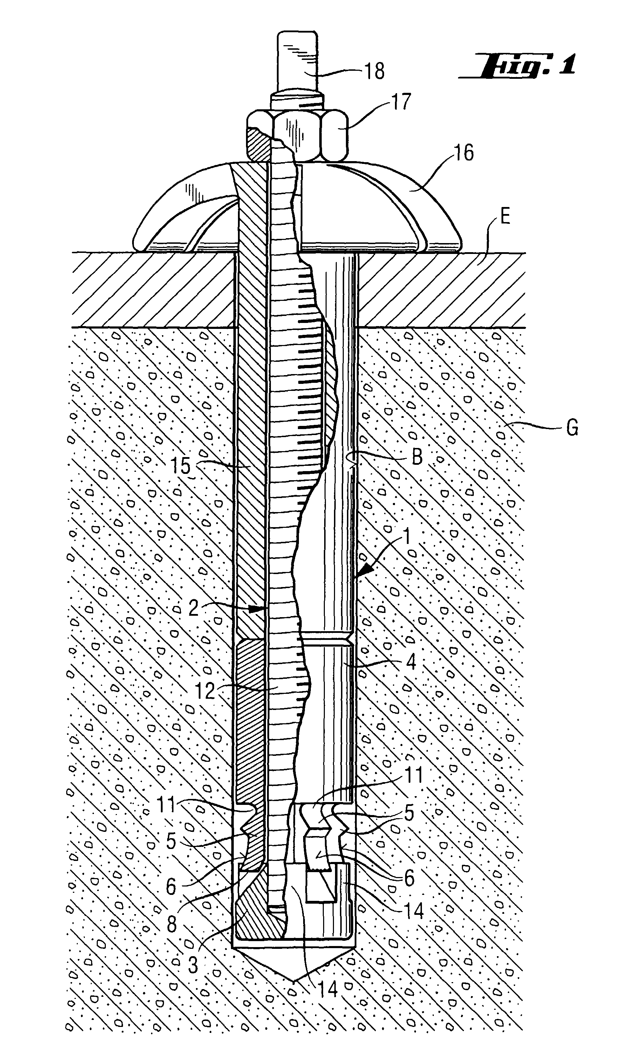

Eine beispielsweise Ausführungsvariante des erfindungsgemässen selbstschneidenden Hinterschnittankers ist in Fig. 1 gesamthaft mit dem Bezugszeichen 1 versehen. Gemäss der Darstellung ist es in eine Aufnahmebohrung B eingesetzt, um ein Bauteil E am Untergrund G festzulegen. Der Hinterschnittanker 1 umfasst eine Ankerstange 2 mit einem Schaft 12, der an seinem in Setzrichtung vorderen Ende einen Konus 3 aufweist, der sich in Richtung seines freien Endes erweitert. Eine Hülse 4 ist über die Ankerstange 2 geschoben und längs des Schafts 12 verschiebbar. Die Hülse 4 weist an ihrem vorderen Ende eine Anzahl Schneidlappen 5 auf, die durch Zwischenräume voneinander getrennt sind und sich von einem plastischen Gelenk 11 in Richtung des Konus 3 erstrecken. Die Schneidlappen 5 sind an ihren freien Stirnflächen 8 mit Schneiden ausgestattet, welche beispielsweise gehärtete Vorsprünge oder Hartmetallschneideinsätze sein können. Die gehärteten Vorsprünge können Schweisspunkte sein, die auf die Stirnfläche 8 aufgebracht sind. Es können beispielsweise auch Stücke aus Federstahl an der Stirnfläche 8 angeschweisst sein, die durch den Schweissvorgang zusätzlich gehärtet werden. Die freie Stirnfläche 8 kann auch gehärtete zahnartige Profilierungen aufweisen.

Im Anschluss an die Hülse 4 ist eine Schubhülse 15 auf die Ankerstange 2 geschoben, die einen umlaufenden Flansch 16 aufweist, der beispielsweise, wie dargestellt, tellerfederartig gekrümmt sein kann. Eine Mutter 17 ist auf die im rückwärtigen Abschnitt mit einem Aussengewinde versehene Ankerstange 2 geschraubt und verhindert ein unbeabsichtigtes Lösen der Vorschubhülse 15 und der Hülse 4 mit den Schneidlappen. Durch Aufschrauben der Mutter 17 auf die Ankerstange 2 wird der tellerfederartige Flansch 16 niedergepresst. Dabei wird die Schubhülse 15 in Setzrichtung vorwärtsgeschoben und die Hülse 4 mit den Schneidlappen 5 auf den Konus 3 am vorderen Ende der Ankerstange 2 geschoben, wobei die Schneidlappen 5 radial ausgestellt werden. Das Aufschrauben der Mutter 16 auf die Ankerstange 2 kann motorisch unterstützt werden. Dazu ist die Ankerstange 2 an ihrem rückwärtigen Ende mit einem Einsteckende 18 ausgestattet, mit dem es an einen Drehantrieb kuppelbar, beispielsweise in die Werkzeugaufnahme eines Drehbohrgerätes der Anmelderin ansteckbar, ist. Die Hülse 4 und die Ankerstange 2 sind drehgekoppelt. Dazu sind am Konus 3 Mitnehmerstege 14 vorgesehen, die in die Zwischenräume zwischen den Schneidlappen 3 eingreifen und die Rotation der Ankerstange 2 auf die Hülse 4 übertragen. Durch die Rotation der Ankerstange 2 zusammen mit der Hülse 4 unter gleichzeitigem Ausstellen der Schneidlappen 5 durch Aufschieben der Hülse 4 auf den Konus 3 wird fräsend die gewünschte Hinterschneidung erstellt.

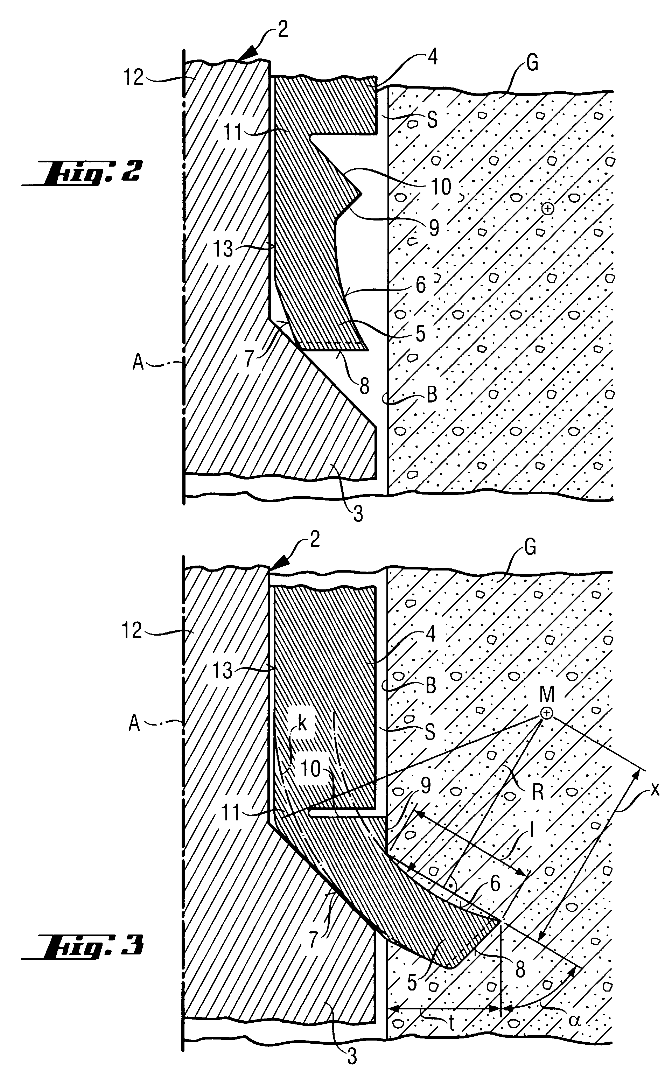

Die Schneidlappen 5 weisen jeweils eine vom Konus 3 abgewandte Aussenfläche 6 auf, die sich vom freien Ende der Schneidlappen 5 in Richtung des plastischen Gelenks 11 erstreckt. Gemäss der Erfindung ist wenigstens der schneidwirksame Abschnitt der Aussenfläche 6, der sich bei der Erstellung der Hinterschneidung in den Untergrund G fräst, im wesentlichen als Torusfläche ausgebildet. In Fig. 2 und 3 ist der erfindungswesentliche Abschnitt des selbstschneidenden Hinterschnittankers 1 in vergrössertem Massstab schematisch dargestellt. Dabei zeigt Fig. 2 den Hinterschnittanker 1 im unverankerten Ausgangszustand und Fig. 3 den Hinterschnittanker 1 im Endzustand, nachdem die Hinterschneidung erstellt wurde. Die Länge des schneidwirksamen Abschnitts der Aussenfläche 6 der Schneidlappen ist mit I bezeichnet. Die Torusfläche weist einen Krümmungsmittelpunkt M auf, der durch den Schnittpunkt der Streckensymmetrale auf die Längserstreckung I des schneidwirksamen und in der Hinterschneidung befindlichen Abschnitts der Aussenfläche 6 bei ausgestellten Schneidlappen 5 und der Winkelsymmetrale im Übergang des Schaftes der Ankerstange 2 in den Konus 3 festgelegt ist. Der Abstand des auf der Streckensymmetrale liegenden Krümmungsmittelpunktes M von der mit I bezeichneten Geraden, die die Längserstreckung des in der Hinterschneidung befindlichen Abschnitts der Aussenfläche 6 definiert, ist mit x bezeichnet. Der Winkel, den die Gerade I mit der Achse A des Hinterschnittankers einschliesst, ist mit $\alpha$ bezeichnet. Der Krümmungsradius R ergibt sich aus der Beziehung $R = [x^2 + (t/2 \sin \alpha)^2]^{1/2}$, wobei t die geforderte Hinterschnitttiefe bezeichnet.

Wie aus Fig. 3 ersichtlich ist, ist die dem Konus 3 zugewandte Rückfläche 7 der Schneidlappen 5 im Verlauf weitgehend der Form der Aussenfläche 6 angeglichen. Der Krümmungskreis k, der dem Verlauf der Rückfläche am nächsten kommt, besitzt einen Mittelpunkt, der mit dem Krümmungsmittelpunkt M der torischen Aussenfläche 6 zusammenfällt. Der Verlauf der Rückfläche 7 ist der torischen Aussenfläche 6 durch eine Anordnung von Zylinder- und Kegelflächen angenähert und geht ab dem plastischen Gelenk 11 in die achsparallele Innenfläche 13 der Hülse 4 über. Die Anordnung der Zylinder- und Kegelflächen ist derart gewählt, dass die ausgestellten Schneidlappen 5 in weitgehend flächiger Anlage zum Kegel 3 sind, um die Schneidlappen 5 bei Belastung möglichst gut abzustützen.

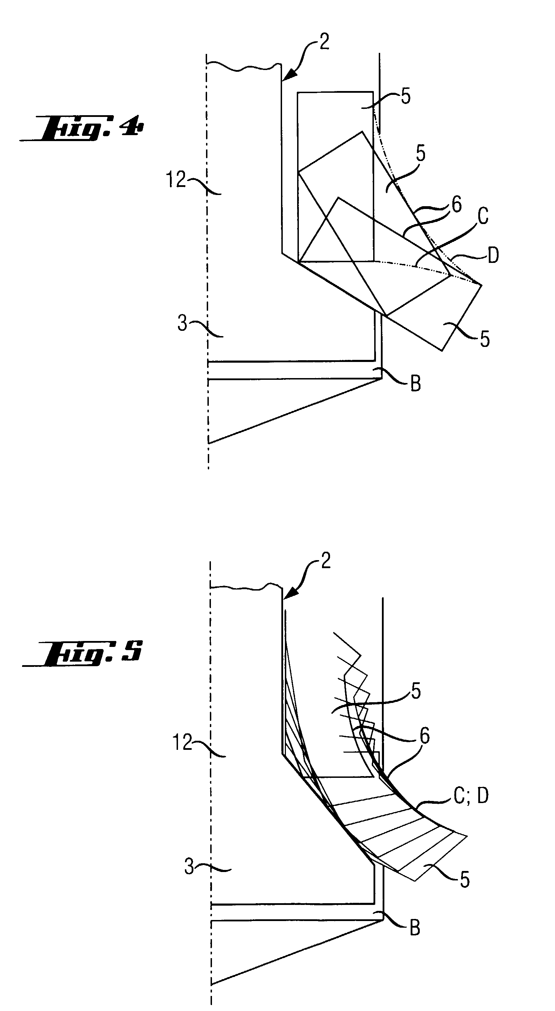

In den Fig. 4 und 5 sind der Verlauf der Schneidkurve C und der Schleppkurve D der Schneidlappen 5 für einen Hinterschnittanker des Stands der Technik (Fig. 4) und für einen erfindungsgemässen Hinterschnittanker (Fig. 5) dargestellt. Als Schneidkurve C wird dabei der Verlauf des äussersten freien Endes der Aussenfläche 6 des Schneidlappens 5 während des Ausstellvorgangs bezeichnet. Die Schleppkurve D ist durch den Verlauf des gegenüberliegenden Endbereiches der Aussenfläche 6 gegeben. Während bei den Schneidlappen 5 der Hinterchnittanker des Stands der Technik die Verläufe der Schneidkurve C und der Schleppkurve D voneinander abweichen, fallen sie bei einem Hinterschnittanker, dessen Schneidlappen 5 gemäss der Erfindung eine Aussenfläche 6 aufweisen, die wenigstens im schneidwirksamen Abschnitt als Torusfläche ausgebildet ist, praktisch zusammen.

Aus den Detaildarstellungen in Fig. 2 und 3 ist ersichtlich, dass die torische Aussenfläche 6 in einen höckerartigen Vorsprung übergeht. Der höckerartige Vorsprung ist durch eine Schulter 9 und einen Verbindungsabschnitt 10 gebildet, der die Schulter 9 mit dem plastischen Gelenk 11 verbindet. Die Schulter 9 erstreckt sich von der torischen Aussenfläche 6 in Richtung des Umfangs der Hülse 4 und ist als Zylinderfläche ausgebildet. Im Ausgangszustand ist die Übergangskante zwischen der Schulter 9 und dem vorzugsweise als Zylinderfläche ausgebildeten Verbindungsabschnitt 10 innerhalb des Umfangs der Hülse 4 angeordnet bzw.

ragt sie maximal bis zum Umfang der Hülse 4. Indem die Übergangskante den Umfang der Hülse nicht überragt, behindert sie das Einsetzen des Hinterschnittankers in die Aufnahmebohrung B nicht. Der Neigungswinkel der Schulter 9 ist derart gewählt, dass die Schulter 9 bei ausgestellten Schneidlappen 5 den Ringspalt S zwischen dem Umfang der Hülse 4 und der Wandung der Aufnahmebohrung B überbrückt und wenigstens bereichsweise in flächige Anlage zur Wandung der Aufnahmebohrung B kommt. Gemäss dem dargestellten Ausführungsbeispiel weisen die Schulter 9 und der Verbindungsabschnitt 10 an der Übergangskante etwa einen rechten Winkel auf und ist der Neigungswinkel der Schulter 9 derart gewählt, dass die Schulter 9 bei ausgestellten Schneidlappen 5 im wesentlichen parallel zur Achse A orientiert ist. Vorzugsweise entsprechen die Neigungswinkel der Schulter 9 und des Konus 3 gegenüber dem Schaft 12 einander. Der Verbindungsabschnitt 10 verläuft etwa senkrecht zur Achse A. Seine Länge ist derart bemessen, dass die Übergangskante das Ausstellen des Schneidlappens 5 nicht behindert. Die Schulter 9 führt zu einer Zentrierung des Hinterschnittankers bei der Erstellung der Hinterschneidung, welche dadurch über den gesamten Umfang der Aufnahmebohrung mit der gleichen Hinterschnitttiefe erstellt werden kann. Die Schulter 9 liegt flächig an der Wandung der Aufnahmebohrung B an und stützt die Bohrungswandung oberhalb der Hinterschneidung ab. Dadurch kann ein Abscheren des Untergrunds verhindert werden.

Indem die Aussenfläche der Schneidlappen über den schneidwirksamen Bereich als Torusfläche ausgebildet ist, können die Schleppkurve und die Schneidkurve der Schneidlappen weitgehend zur Übereinstimmung gebracht werden. Die Schneidlappen nehmen während des Schneidvorgangs ihre endgültige Lage in der Hinterschneidung ein, und ihre Aussenflächen liegen wegen der weitgehenden Übereinstimmung der Schleppkurve und der Schneidkurve flächig an der axialen Hinterschnittfläche an. Dadurch wird die Last sehr gleichmässig in den Untergrund eingeleitet und führt auch bei hohen Lastniveaus zu keiner Zerstörung des Untergrunds im Anlagebereich. Die gleichmässige Lasteinleitung in den Untergrund verbessert auch die erzielbaren Haltewerte des Hinterschnittankers.

Durch die erfindungsgemässe geometrische Ausbildung der Schneidlappen können Hinterschneidungen erzeugt werden, deren Hinterschnittfläche auch um grössere Winkel, beispielsweise 40° bis 70°, insbesondere etwa 60°, gegenüber der Wandung der zylindrischen Aufnahmebohrung geneigt ist. Dadurch werden die bei Befestigungen mit Hinterschnittankern schon geringen zulässigen Achs- und Randabstände der Befestigungspunkte noch weiter reduziert. Die grösseren Neigungswinkel der Hinterschnittfläche verringern bei gerissenem Untergrund auch die Verschiebung des Hinterschnittankers im sich öffnenden Riss. Die Krafteinleitung in den Untergrund im Bereich der Hinterschneidung kann unter Ausnutzung eines selbststützenden Gewölbeeffektes noch dadurch verbessert werden, wenn bei den gewählten Hinterschnittwinkeln der Neigungswinkel des Konus gegenüber der Achse des Schaftes der Ankerstange etwa 30° bis etwa 45°, insbesondere etwa 40°, beträgt. Die Hinterschnittiefe wird für die Dimensionen M4 bis M30 zu mindestens etwa 2,0 mm bis etwa 13,3 mm gewählt, wobei die Hinterschnittiefen in Richtung grösserer Dimensionen der Hinterschnittanker zunehmen.

**Patentansprüche**

1. Hinterschnittanker mit einer Ankerstange (2), die einen Schaft (12) umfasst, der an seinem in Setzrichtung vorderen Ende einen Konus (3) aufweist, der sich zu seinem freien Ende hin erweitert, und einer über die Ankerstange (2) geschobenen, längsverschiebbaren Hülse (4), die an ihrem vorderen Ende (8) mit Schneiden ausgestattete Schneidlappen (5) aufweist, die durch Zwischenräume voneinander getrennt sind und sich von einem plastischen Gelenk (11) in Richtung des Konus (3) erstrecken und durch Aufschieben der Hülse (4) auf den Konus (3) radial ausstellbar sind, **dadurch gekennzeichnet**, dass die sich vom freien Vorderende der Schneidlappen (5) in Richtung des plastischen Gelenks (11) erstreckenden Abschnitte eine vom Konus (3) abgewandte Aussenfläche (6) aufweisen, die wenigstens im schneidwirksamen Bereich im wesentlichen als Torusfläche ausgebildet ist.

2. Hinterschnittanker nach Anspruch 1, dadurch gekennzeichnet, dass die torische Aussenfläche (6) einen Krümmungsmittelpunkt (M) aufweist, der durch den Schnittpunkt der Streckensymmetrale des in der Hinterschneidung befindlichen Abschnitts (1) der Aussenfläche (6) der Schneidlappen und der Winkelsymmetrale im Übergang vom Schaft (12) zum Konus (3) gegeben ist, und einen Radius aufweist, der durch die Beziehung

$$R = [x^2 + (t/2 \sin \alpha)^2]^{\frac{1}{2}}$$

gegeben ist, wobei R den Radius der torischen Aussenfläche (6) bezeichnet, x die Länge der Streckensymmetrale vom Mittelpunkt (M) bis zum Schnittpunkt mit der Längserstreckung (I) des in der Hinterschneidung befindlichen Abschnitts der torischen Aussenfläche (6) und t die senkrecht zur Achse (A) gemessene Hinterschnittiefe ist und $\alpha$ für die mittlere Neigung des in der Hinterschneidung befindlichen Abschnitts der Aussenfläche (6) gegenüber der Achse (A) steht.

3. Hinterschnittanker nach Anspruch 1 oder 2, dadurch gekennzeichnet, dass die Schneiden an der freien Stirnfläche (8) der Schneidlappen (5) vorgesehen sind, die im Ausgangszustand im wesentlichen senkrecht zur Achse (A) des Schaftes (12) orientiert ist.

4. Hinterschnittanker nach Anspruch 3, dadurch gekennzeichnet, dass die mit der Oberfläche des Konus (3) zusammenwirkende Rückfläche (7) der Schneidlappen (5) einen Verlauf aufweist, der weitgehend dem als Torusfläche ausgebildeten Abschnitt der Aussenfläche (6) der Schneidlappen (5) angeglichen ist und in den achsparallelen Verlauf der Innenfläche (13) der Hülse (4) übergeht, wobei der dem Verlauf der Rückfläche (7) am nächsten kommende Krümmungskreis (k) einen Mittelpunkt aufweist, der mit dem Krümmungsmittelpunkt (M) der torischen Aussenfläche (6) zusammenfällt.

5. Hinterschnittanker nach Anspruch 4, dadurch gekennzeichnet, dass die Rückfläche (7) über ihre Längserstreckung abschnittsweise angeordnete Kegelund Zylinderflächen aufweist, deren Anordnung derart gewählt ist, dass die Rückfläche (7) im ausgestellten Zustand der Schneidlappen (5) wenigstens bereichsweise in flächiger Anlage zum Konus (3) ist.

6. Hinterschnittanker nach einem der vorangehenden Ansprüche, dadurch gekennzeichnet, dass die torische Aussenfläche (6) eines jeden Schneidlappens (5) an eine Schulter (9) angrenzt, die als Zylinderfläche ausgebildet ist und sich in Richtung des Umfangs der Hülse (4) erstreckt und- über einen Verbindungsabschnitt (10), dessen Aussenfläche als Zylinderfläche ausgebildet ist, mit dem plastischen Gelenk (11) verbunden ist, wobei die Schulter (9) im Ausgangszustand gegenüber der Achse (A) des Schaftes (12) geneigt ist und der Verbindungsabschnitt (10) eine derartige Länge aufweist, dass die Schulter (9) im ausgestellten Zustand wenigstens bereichsweise den Umfang der Hülse (4) überragt.

7. Hinterschnittanker nach Anspruch 6, dadurch gekennzeichnet, dass die Schulter (9) und der Verbindungsabschnitt (10) am Übergangsbereich einen rechten Winkel einschliessen.

8. Hinterschnittanker nach Anspruch 7, dadurch gekennzeichnet, dass die Schulter (9) im Ausgangszustand mit der torischen Aussenfläche (6) einen derartigen Winkel einschliesst, dass sie im ausgestellten Zustand achsparallel orientiert ist.

9. Hinterschnittanker nach Anspruch 8, dadurch gekennzeichnet, dass die Schulter (9) im Ausgangszustand an ihrem von der Achse (A) des Schaftes (12) entferntesten Bereich zur Achse um einen Winkel (α) geneigt ist, der im wesentlichen dem Neigungswinkel des Konus (3) gegenüber der Achse (A) entspricht.

## Claims

1. Undercutting anchor comprising an anchor rod (2) which includes a shaft (12) which has at its front end, as seen in the setting direction, a cone (3) which widens towards its free end, and a longitudinally displaceable sleeve (4), which is pushed over the anchor rod (2) and which has at its front end (8) cutting tabs (5), which are provided with cutters and which are separated from each other by gaps and extend from a ductile hinge (11) in the direction of the cone (3) and which are radially extracted by pushing the sleeve (4) onto the cone (3), **characterised in that** the sections which extend from the free front end of the cutting tabs (5) in the direction of the ductile hinge (11) have an outside surface (6), which is facing away from the cone (3) and which is at least in the cutting area essentially designed as a toroidal surface.

2. Undercutting anchor according to Claim 1, **characterised in that** the toroidal outside surface (6) comprises a curvature centre point (M) which is given by the point of intersection of the path symmetry line of the section (I) of the outside surface (6) of the cutting tabs located in the undercutting and the angle symmetry line in the transition from shaft (12) to cone (3), and comprising a radius given by the equation

$$R = [x^2 = (t/2 \sin \alpha)^2]^{\frac{1}{2}}$$

where R is the radius of the toroidal outside surface (6), x is the length of the path symmetry line from the centre point (M) to the point of intersection with longitudinal extent (I) of the section of the toroidal outside surface (6) located in the undercut, and t is the undercutting depth as measured vertically to axis (A), and α is the mean inclination of the section of the outside surface (6) in the undercut relative to the axis (A).

3. Undercutting anchor according to Claim 1 or 2, **characterised in that** the cutters are provided at the free end surface (8) of the cutting tabs (5) which is in the initial state oriented essentially vertically to the axis (A) of the shaft (12).

4. Undercutting anchor according to Claim 3, **characterised in that** the rear surface (7) of the cutting tabs (5) which co-acts with the surface of the cone (3) runs a course which is extensively matched to the toroidal section of the outside surface (6) of the cutting tabs (5) and merges into the axis parallel course of the inside surface (13) of the sleeve (4), and the curvature circle (k) nearest the course of the rear surface (7) has a centre point which coincides with the curvature centre point (m) of the toroidal outside surface (6).

5. Undercutting anchor according to Claim 4, **characterised in that** the rear surface (7) comprises over its longitudinal extent sectionally arranged conical or cylindrical surfaces which are configured in such a manner that the rear surface (7) in the extracted state of the cutting tabs (5) is at least sectionally surface abutting the cone (3).

6. Undercutting anchor according to one of the above claims, **characterised in that** the toroidal outside surface (6) of each cutting tab (5) is adjacent a shoulder (9) of cylindrical shape and extends in the direction of the periphery of the sleeve (4) and over a connecting section (10), the outside surface of which is of cylindrical design, joined to the ductile hinge (11), and the shoulder (9) is in the initial state slanted relative to the axis (A) of the shaft (12), and the connecting section (10) comprises such length that the shoulder (9) in its extracted state projects at least sectionally over the periphery of the sleeve (4).

7. Undercutting anchor according to Claim 6, **characterised in that** the shoulder (9) and the connecting section (10) include in the transitional area a right angle.

8. Undercutting anchor according to Claim 7, **characterised in that** the shoulder (9) includes in the initial state with the toroidal outside surface (6) such angle that it is oriented axis parallel in its extracted state.

9. Undercutting anchor according to Claim 8, **characterised in that** the shoulder (9) is in its initial state in its area farthest removed from the axis (A) of the shaft (12) slanted relative to the axis by an angle (α) which essentially corresponds with the inclination angle of the cone (3) relative to the axis (A).

## Revendications

1. Dispositif d'ancrage à dépouille comprenant une tige d'ancrage (2) pourvue d'une queue (12) munie, à son extrémité située à l'avant par rapport au sens d'enfoncement, d'un cône (3) qui s'élargit vers l'extrémité libre de ladite queue, et comprenant un manchon à coulissement longitudinal (4) qui est emmanché sur la tige d'ancrage (2) et qui comporte, à son extrémité avant (8), des pattes coupantes (5) pourvues de taillants qui sont séparées les unes des autres par des interstices et qui, à partir d'une articulation plastique (11) s'étendent en direction du cône (3) et peuvent être déployées radialement par un coulissement du manchon (4) sur le cône (3), caractérisé en ce que les portions s'étendant en direction de l'articulation plastique (11) à partir de l'extrémité avant libre des pattes coupantes (5) présentent une surface extérieure (6) qui est orientée à l'opposé du cône (3) et qui, tout au moins dans la zone de coupe, est sensiblement conformée en surface torique.

2. Dispositif d'ancrage à dépouille selon la revendication 1, caractérisé en ce que la surface extérieure torique (6) possède un centre de courbure (M) qui est défini par le point d'intersection entre l'axe de symétrie rectiligne de la portion (1) de la surface extérieure (6) des pattes coupantes située dans la zone de dépouille et la bissectrice de l'angle formé au point de transition entre la queue (12) et le cône (3), et présente un rayon qui est défini par la relation

$$R = [x^2 + (t/2 \sin \alpha)^2]^{1/2}$$

R désignant le rayon de la surface extérieure torique (6), x la longueur de l'axe de symétrie rectiligne entre le centre (M) et le point d'intersection avec l'extension longitudinale (1) de la portion de surface extérieure torique (6) située dans la zone de dépouille, t la profondeur de dépouille mesurée perpendiculairement à l'axe (A), et $\alpha$ l'inclinaison moyenne de la portion de la surface extérieure (6) située dans la zone de dépouille par rapport à l'axe (A).

3. Dispositif d'ancrage à dépouille selon la revendication 1 ou 2, caractérisé en ce que les taillants se trouvent sur la face frontale libre (8) des pattes coupantes (5), laquelle est orientée, à l'état initial, sensiblement perpendiculairement à l'axe (A) de la queue (12).

4. Dispositif d'ancrage à dépouille selon la revendication 3, caractérisé en ce que la face arrière (7) des pattes coupantes (5) qui coopère avec la surface du cône (3) présente un tracé qui est adapté en grande partie à celui de la portion de la surface extérieure (6) des pattes coupantes (5) conformée en surface torique et qui se prolonge par la face intérieure (13) du manchon (4) dont le tracé est parallèle à l'axe de ce dernier, le cercle de courbure (k) le plus proche du tracé de la face arrière (7) possédant un centre qui coïncide avec le centre de courbure (M) de la surface extérieure torique (6).

5. Dispositif d'ancrage à dépouille selon la revendication 4, caractérisé en ce que, sur son extension longitudinale, la face arrière (7) présente des faces coniques et cylindriques qui occupent des portions de son extension longitudinale et dont la disposition est choisie pour que, à l'état déployé des pattes coupantes (5), la face arrière (7) soit, au moins par endroits, en contact à plat avec le cône (3).

6. Dispositif d'ancrage à dépouille selon une des revendications précédentes, caractérisé en ce que la surface extérieure torique (6) de chaque patte coupante (5) est adjacente à un épaulement (9), lequel est conformé en surface cylindrique, s'étend dans le sens de la périphérie du manchon (4) et est relié à l'articulation plastique (11) par une portion de liaison (10) dont la surface extérieure est conformée en surface cylindrique, l'épaulement (9) étant incliné par rapport à l'axe (A) de la queue (12) à l'état initial et la portion de liaison (10) présentant une longueur telle que, à l'état déployé, l'épaulement (9) dépasse au moins par endroits de la périphérie du manchon (4).

7. Dispositif d'ancrage à dépouille selon la revendication 6, caractérisé en ce que, dans leur zone de transition, l'épaulement (9) et la portion de liaison (10) forment un angle droit.

8. Dispositif d'ancrage à dépouille selon la revendication 7, caractérisé en ce que, à l'état initial, l'épaulement (9) forme avec la surface extérieure torique (6) un angle tel que, à l'état déployé, il est parallèle à l'axe du manchon.

9. Dispositif d'ancrage à dépouille selon la revendication 8, caractérisé en ce que, à l'état initial, dans sa zone la plus éloignée de l'axe (A) de la queue (12), l'épaulement (9) est incliné par rapport à l'axe selon un angle ($\alpha$) qui correspond sensiblement à l'angle d'inclinaison du cône (3) par rapport à l'axe (A).

**Fig. 2**

**Fig. 3**

*Fig. 4*

*Fig. 5*